(19) Europäisches Patentamt
European Patent Office
Office européen des brevets

(11) Veröffentlichungsnummer: **0 009 613**
**A1**

# (12) EUROPÄISCHE PATENTANMELDUNG

(21) Anmeldenummer: 79103154.5

(22) Anmeldetag: 27.08.79

(51) Int. Cl.³: C 08 G 18/69
C 08 G 18/65, C 08 G 18/10
C 08 J 3/24

(30) Priorität: 06.09.78 DE 2838756

(43) Veröffentlichungstag der Anmeldung: 16.04.80 Patentblatt 80/8

(84) Benannte Vertragsstaaten:
AT BE DE FR GB IT NL

(71) Anmelder: BAYER Aktiengesellschaft
Zentralbereich Patente,Marken und Lizenzen Bayerwerk
D-5090 Leverkusen 1(DE)

(72) Erfinder: Schwindt, Jürgen, Dr.
Kleist-Platz 4
D-5090 Leverkusen 1(DE)

(72) Erfinder: Ganster, Otto, Dr.
Berliner Strasse 64
D-5090 Leverkusen 1(DE)

(72) Erfinder: Meiners, Hans-Joachim, Dr.
Ringstrasse 25
D-5090 Leverkusen 17(DE)

**(54) Verfahren zur Herstellung von vulkanisierten, Urethangruppen aufweisenden Elastomeren und deren Verwendung.**

(57) Verfahren zur Herstellung von vulkanisierten, Urethangruppen aufweisenden Elastomeren durch Gießen, dadurch gekennzeichnet, daß man

1. flüssige, funktionelle Gruppen aufweisende Dien-Polymerisate mit
2. mindestens zwei Hydroxylgruppen aufweisenden Verbindungen vom Molekulargewicht 400 bis 10 000,
3. Polyisocyanaten,
4. mindestens zwei aktive Wasserstoffatome aufweisende Vernetzer vom Molekulargewicht 32 bis 400,
5. den für die Vulkanisation üblichen Vulkanisations- und Vernetzungsmitteln, sowie gegebenenfalls
6. verstärkenden Füllstoffen

vermischt, das Gemisch in eine Form gießt, dort reagieren läßt und das Formteil anschließend bei Temperaturen über 120°C vulkanisiert.

EP 0 009 613 A1

BAYER AKTIENGESELLSCHAFT
Zentralbereich
Patente, Marken und Lizenzen

5090 Leverkusen, Bayerwerk
GM/bc

:ZEICHNUNG GEÄNDERT
siehe Titelseite

Verfahren zur Herstellung von vulkanisierten, Urethangruppen aufweisenden Elastomeren

Die vorliegende Erfindung betrifft nach dem Gießverfahren hergestellte vulkanisierte, Urethangruppen aufweisende Elastomere sowie ein Verfahren zu ihrer Herstellung.

Aus der DE-AS 2 602 495 ist bereits bekannt, daß sich aus funktionelle Gruppen aufweisenden flüssigen Dienpolymerisaten, verstärkenden Füllstoffen, Kettenverlängerern wie Isocyanaten oder Aminen und Vulkanisationsmitteln, gegebenenfalls in Gegenwart von Polyäthern oder Polyestern, elastomere Formkörper herstellen lassen, indem das Gemisch der o.g. Komponenten zunächst bei Temperaturen zwischen 20 und 125°C und anschließend in einer zweiten Stufe bei Temperaturen über 140°C vulkanisiert wird.

Für dieses Verfahren ist ein Funktionalitätsgrad der einzusetzenden flüssigen Dienpolymerisate von 1,8 bis 2,0 zwingende Voraussetzung. Die Verwendung von Dienpolymerisaten mit einem derartigen Funktionalitätsgrad ist indessen insofern ungünstig, da diese Polymerisate im allgemeinen schwer zugänglich sind (Herstellung üblicherweise über eine relativ aufwendige anionische Polymerisation).

Außerdem zeigen die nach der DE-AS erhaltenen Elastomeren nach der Kettenverlängerung noch eine so geringe Strukturfestigkeit, daß der Vulkanisationsschritt in der selben Form durchgeführt werden muß.

Schließlich ist bei dem bekannten Verfahren nachteilig, daß die Komponenten nach der üblichen Kautschuktechnik über Walzen mit hohem Energieaufwand vermischt werden müssen.

Die vorliegende Erfindung betrifft nun ein Verfahren zur Herstellung von Urethangruppen aufweisenden, vulkanisierten Elastomeren, bei dem die Nachteile der bekannten Verfahren vermieden werden. Erfindungsgemäß wird eine Mischung, bestehend aus einem flüssigen Dienpolymerisat, einem höhermolekularen Polyol und einem Vernetzer, z.B. einem Amin, sowie darin feinst eindispergiert Vulkanisationsmittel und -hilfsstoffe und gegebenenfalls Verstärkungsfüllstoffe (Ruß, Aerosil), mit einem Polyisocyanat nach dem Gießverfahren in einer Form umgesetzt.

Das Formteil ist (schon vor der Vulkanisation)

nach kurzer Zeit (weniger als 5 Minuten) bereits so weit ausreagiert, daß es entformt werden kann. Die nachträgliche Vulkanisation bei Temperaturen über 120°C führt zu einer deutlichen Verbesserung der mechanischen Werte des Formteils.

Gegenstand der vorliegenden Erfindung ist somit ein Verfahren zur Herstellung von vulkanisierten, Urethangruppen aufweisenden Elastomeren durch Gießen, dadurch gekennzeichnet, daß man

1. flüssige, funktionelle Gruppen aufweisende Dienpolymerisate mit

2. mindestens zwei Hydroxylgruppen aufweisenden Verbindungen vom Molekulargewicht 400 bis 10 000,

3. Polyisocyanaten,

4. mindestens zwei aktive Wasserstoffatome aufweisende Vernetzer vom Molekulargewicht 32 bis 400,

5. den für die Vulkanisation üblichen Vulkanisations- und Vernetzungsmitteln, sowie gegebenenfalls

6. verstärkenden Füllstoffen

vermischt, das Gemisch in eine Form gießt, dort reagieren läßt und das Formteil anschließend bei Temperaturen über 120°C vulkanisiert.

Vorzugsweise werden die (gegenüber Isocyanaten reaktionsfähige Wasserstoffatome aufweisenden) Komponenten 1) 2) und 4) mit den Polyisocyanaten bei Kennzahlen von 80 bis 120, besonders bevorzugt 100 bis 110, umgesetzt.

Die Komponenten 1) und 2) liegen in der Regel in einem solchen Mengenverhältnis vor, daß auf 20 bis 80, vorzugsweise 20 bis 60 Gew.-Teile der Komponente 1) 80 bis 20, vorzugsweise 80-40 Gew.-Teile der Komponente 2) kommen.

Die Komponente 4) wird in der Regel in Mengen von 3-30, vorzugsweise 5 bis 20 Gew.-%, bezogen auf 100 Gew.-Teile der Komponenten 1) plus 2), eingesetzt.

Das erfindungsgemäße Verfahren zeigt überraschenderweise folgende Vorteile:

1. Die Funktionalität der einzusetzenden flüssigen Dienpolymerisate ist nicht auf 1,8 bis 2,0 beschränkt. Vielmehr können nunmehr die handelsüblichen, wohlfeilen, durch radikalische Polymerisation gewonnen flüssigen Dienpolymerisate (vorzugsweise mit einem mittleren Funktionalitätsgrad von 2,4) eingesetzt werden.

2. Es gelingt nunmehr, die Viskosität des Gemisches der Ausgangsmaterialien so niedrig zu halten, daß es nach dem Gießverfahren verarbeitet werden kann.

3. Die erhaltenen Urethangruppen aufweisenden Elastomeren weisen bereits vor der Vulkanisation eine so gute Strukturfestigkeit auf, daß sie entformt werden können

und daß die Vulkanisation, die die mechanischen Eigenschaften des Formteils weiter verbessert, außerhalb der Form stattfinden kann.

4. Das erfindungsgemäße Verfahren führt zu einer deutlichen Energieeinsparung (durch Anwendung des Gießverfahrens und Vermeidung des Einwalzens) und zu einer drastischen Reduktion der für die Endfertigung benötigen Formenzahl.

Gemäß der Erfindung verwendet man als Ausgangsprodukte 1) flüssige Dienpolymerisate mit einem Molekulargewicht in der Regel zwischen 500 und 30 000, vorzugsweise 1000 und 10 000, die als funktionelle Gruppen Carboxyl-, Amino-, Hydroxyl- und/oder Thiolgruppen oder Halogenatome, vorzugsweise Hydroxylgruppen, enthalten, in der Regel eine Funktionalität von 2 bis 3 aufweisen und deren Kohlenwasserstoffkette aus einem Homopolymerisat konjugierter Diene oder aus einem Mischpolymerisat von konjugierten Dienen entweder miteinander oder mit vinylaromatischen Verbindungen, z.B. aus Polybutadien, Polyisopren, Polypiperylen, Polychloropren, Polypentadien, den Copolymerisaten von Butadien und Styrol, Butadien und Isopren, Styrol und Isopren, Butadien oder Isopren und Vinylnaphthalin, besteht, wobei die Kette gegebenenfalls durch Alkyl-, Alkoxylgruppen und Halogene substituiert sein kann; die Kohlenwasserstoffkette des Vorpolymerisats kann auch aus einem Copolymerisat eines konjugierten Diens mit einer Verbindung aus der Gruppe der Vinylnitrile, z.B. aus einem Copolymerisat von Butadien oder Isopren mit Acrylnitril oder Metacrylnitril bestehen; oder aus einem Terpolymerisat von konjugierten Dienen entweder untereinander oder mit vinylaromatischen Verbindungen und/oder mit Vinylnitrilen. Die in der Kette entweder in statistischer Verteilung oder als Blöcke ge-

bundenen monomeren Einheiten und die Anteile der Monomeren sind variabel. Gemische aus mehreren Dienpolymerisaten können erfindungsgemäß eingesetzt werden.

Als flüssige Dienpolymerisate sind erfindungsgemäß besonders bevorzugt:

Polybutadienole, Copolymere von Styrol und/oder **Acryl**nitril mit Butadien**, die funktionelle Gruppen, z.B. OH-Gruppen, aufweisen.**

Die Funktionalität des flüssigen Dien-Polymerisats wird durch eine Gewichtsbestimmung der an dem Polymerisat sitzenden funktionellen Gruppen, durch die Bestimmung des Molekulargewichts des flüssigen Polymerisats und durch eine Kupplungsreaktion mit einem bifunktionellen, für die an dem flüssigen Polymerisat sitzende funktionelle Gruppe geeigneten Reagens, d.h. entweder einem Polyadditions- oder einem Polykondensationsmittel, bestimmt.

2) Als Ausgangskomponenten ferner Verbindungen mit stens zwei Hydroxylgruppen von einem Molekulargewicht in der Regel von 400 bis 10 000, insbesondere zwei bis acht Hydroxylgruppen aufweisende Verbindungen, speziell solche vom Molekulargewicht 1000 bis 8000, vorzugsweise 1500 bis 8000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische

zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol,Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. $\varepsilon$-Caprolacton, oder aus Hydroxycarbonsäuren, z.B. $\omega$-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid , gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen.

c) Unter den Polythioäthern seien insbesondere die Kondensationsprodukte von Thiodiglykol mit sich selbst und/oder mit anderen Glykolen, Dicarbonsäuren,

Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxyl-

verbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen,

in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 - 10 000 , z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Für die Durchführung des erfindungsgemäßen Verfahrens werden ferner eingesetzt:

3) Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der
n = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8 - 13 C-Atomen,
bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische

dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und

1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

4) Als Vernetzer-Verbindungen mit mindestens 2 gegenüber Isocyanaten reaktionsfähigen Wasserstoffatomen und einem Molekulargewicht von 32 bis 400. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiätanolamin, Triäthanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731 ) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, ß-Methyladipinsäure, Sebazinsäure, Hydracrylsäure und Terephthalsäure; Semicarbazido-alkylen-hydrazide wie z.B. ß-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. ß-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als für das erfindungsgemäße Verfahren besonders geeignet haben sich aromatische Diamine erwiesen, die in o-Stellung zur Aminogruppe mindestens einen Alkylsubstituenten, vorzugsweise mit 1 bis 3 Kohlenstoffatomen, besitzen. Dazu gehören z.B. 1,3-Diäthyl-2,4-diaminobenzol, 2,4-Diaminomesitylen, 1-Methyl-3,5-diäthyl-2,4-diaminobenzol, 1-Methyl-3,5-diäthyl-2,6-diaminobenzol, 1,3,5-Triäthyl-2,6-diaminobenzol oder 3,5,3',5'-Tetraäthyl-4,4'-diaminodiphenylmethan.

Auch der Einsatz von Diaminen der allgemeinen Formel

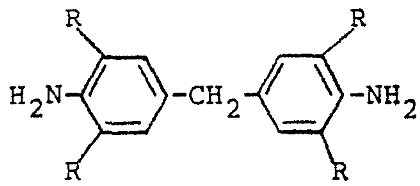

**in der R Wasserstoff oder einen Alkylrest, vorzugsweise mit 1-3 C-Atomen, bedeutet, der mindestens einmal vorhanden sein muß, kommt erfindungsgemäß in Frage.**

Selbstverständlich können die genannten aromatischen Diamine auch im Gemisch angewendet werden oder auch in Kombination mit anderen, vorzugsweise aromatischen, Diaminen.

Besonders bevorzugt ist die Verwendung von 1-Methyl-3,5-diäthyl-2,4-diaminobenzol oder eine Mischung aus diesem mit 1-Methyl-3,5-diäthyl-2,6-diaminobenzol.

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.



BAD ORIGINAL

Als weitere erfindungsgemäß geeignete niedermolekulare Polyole vom Molekulargewicht bis 400 Esterdiole der allgemeinen Formeln

$HO-(CH_2)_x-CO-O-(CH_2)_y-OH$ und

$HO-(CH_2)_x-O-CO-R-CO-O-(CH_2)_x-OH$

in denen

R einen Alkylenrest mit 1-10, vorzugsweise 2-6, C-Atomen bzw. einen Cycloalkylen- oder Arylenrest mit 6-10 C-Atomen

x = 2 - 6 und

y = 3 - 5

bedeuten,

z.B. δ-Hydroxybutyl-ε-hydroxy-capronsäureester, ω-Hydroxyhexyl-γ-hydroxybuttersäureester, Adipinsäure-bis-(ß-hydroxyäthyl)ester und Terephthalsäure-bis(ß-hydroxyäthyl)ester;

Diolurethane der allgemeinen Formel

$HO-(CH_2)_x-O-CO-NH-R'-NH-CO-O-(CH_2)_x-OH$

in der

R' einen Alkylenrest mit 2 - 15, vorzugsweise 2 - 6, C-Atomen oder einen Cycloalkylen- oder Arylenrest mit 6 - 15 C-Atomen und

x eine Zahl zwischen 2 und 6

darstellen,

z.B. 1,6-Hexamethylen-bis-(β-hydroxyäthylurethan) oder 4,4'-Diphenylmethan-bis-(γ-hydroxybutylurethan);

sowie Diolharnstoffe der allgemeinen Formel

$$HO-(CH_2)_x-\underset{R'''}{N}-CO-NH-R''-NH-CO-\underset{R'''}{N}-(CH_2)_x-OH$$

in der

R" einen Alkylenrest mit 2- 15, vorzugsweise 2 - 9, C-Atomen oder einen Cycloalkylen- oder Arylenrest mit 6 - 15 C-Atomen,

R'" Wasserstoff oder eine Methylgruppe und

x die Zahlen 2 oder 3

bedeuten,

z.B. 4,4'-Diphenylmethan-bis-(β-hydroxyäthylharnstoff) oder die Verbindung

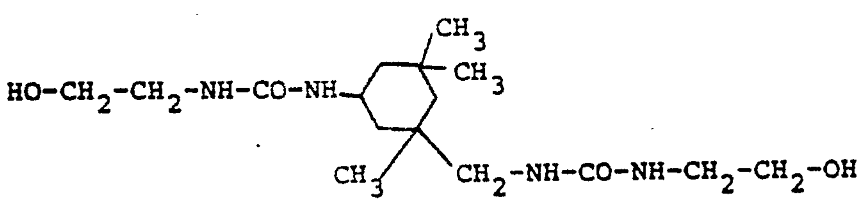

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

5) Unter "üblichen Vulkanisationsmitteln" versteht man nicht nur die eigentlich unter diesem Ausdruck zu verstehenden Mittel, wie Schwefel, die Peroxide, sondern auch die üblichen Vulkanisationsbeschleuniger. Als Vulkanisationsbeschleuniger verwendet man entweder gegenüber dem bifunktionellen Kettenverlängerungsmittel inaktive Verbindungen oder Verbindungen, die normalerweise bei der Polyadditions- oder Polykondensationstemperatur gegenüber dem Kettenverlängerungsmittel reaktionsfähig sind, jedoch durch ein geeignetes Mittel, z.B. eine Einkapselung, inaktiv gemacht worden sind. Man kann somit alle klassischen Mittel, wie die primären, sekundären Amine; die Sulfenamide von Mercaptobenzothiazol und insbesondere das N-Di-isopropylmercaptobenzothiazol-sulfenamid, das N-Dicyclihexyl-mercaptobenzothiazyl-sulfenamid; die Sulfenamide von Thiocarbonsäuren, z.B. das N-Morpholino-sulfenamid der N-Morpholinothio-carbondsäure; die phosphorierten Verbindungen wie z.B. das Bisulfid von Bis-(di-isopropyl-thiophosphoryl), das Trisulfid von Bis-(diäthylthiophosphoryl), das Zink-dibutyl-dithiophosphat; die Guanidine; die Mercaptotriazine, z.B. das 4,4'-Disulfid von Bis-/2-N-äthylamin-6-N-diäthylamin-1,3,5-triazin/, verwenden.

Man kann auch die geeigneten Polyadditonskatalysatoren während der Durchführung des Verfahrens zugeben.

6) Die verwendeten Verstärkerfüllstoffe bestehen aus den z.B. bei der Herstellung von Luftreifen verwendeten Materialien, wie Ruß, Kieselsäure, metallischen Verstärkungselementen, Glas, den Weichmachern und/oder den Streckölen. Diese Füllstoffe sollen bei Durchführung des Verfahrens sehr homogen in dem funktionellen flüssigen Polymerisat dispergiert werden.

Erfindungsgemäß werden noch gegebenenfalls als Hilfs- und Zusatzmittel eingesetzt:

Katalysatoren der an sich bekannten Art, z.B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-ß-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre

Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen,

als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Oberflächenaktive Zusatzstoffe, wie Emulgatoren und Schaumstabilisatoren. Als Emulgatoren kommen z.B. die Natriumsalze von Riciunusöl-sulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und

Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Gießverfahren zu Umsetzung gebracht, wobei man sich oft machineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, beschrieben.

Die nach dem erfindungsgemäßen Verfahren hergestellten Urethangruppen aufweisenden Elastomere können als technische Artikel und vor allem als Reifen oder Reifenbestandteil (z.B. als Lauffläche, Fordbecher, Dichtung, Keilriemen, Matten) Verwendung finden. Sie können Gummi in vielen seiner Anwendungsgebiete vorteilhaft ersetzen.

Beispiel 1 (Vergleichsbeispiel)

A) 100 Gew.-Tle eines Prepolymergemischs (NCO-Gehalt 4,06 %), bestehend aus 80 Gew.-Tln eines Prepolymeren, hergestellt aus einem linearen Polypropylenglykolpolyäther vom Molekulargewicht 2000 (OH-Zahl 56) und 2,4-Toluylendiisocyanat, und 20 Gew.-Tln eines Prepolymeren, hergestellt aus einem linearen Polypropylenglykolpolyäther vom Molekulargewicht 1000 (OH-Zahl 112) und 2,4-Toluylendiisocyanat, werden bei 70°C mit einer Mischung

B) bestehend aus 25 Gew.-Tln eines flüssigen Polybutadienols [polybd R 45 HT der Fa. Arco] und 5,82 Gew.-Tln. eines technischen Gemisches von Diäthyltoluylendiamin vermischt.

c) Das reagierende Gemisch wird in eine vorgeheizte offene Form gegossen, nach weniger als 5 Minuten entformt, 30 Minuten bei 130°C ausgeheizt und 4 Std. bei 80°C getempert.

Die mechanischen Daten der Formteile sind in Tabelle 1 zusammengefaßt.

Beispiel 2

Zu 100 Gew.-Tln. des unter Beispiel 1 A) beschriebenen Prepolymer-Gemischs werden 0,6 g $S_8$-Schwefel und 0,28 g Zink-N-diäthyl-dithiocarbamat [Vulkacit LDA, Bayer AG] feinst verteilt gegeben, und das Gemisch wird entsprechend Beispiel 1 B) und 1 C) zum Formteil verarbeitet.

Beispiel 3

Zu 100 Gew.-Tln. des unter Beispiel 1 A) beschriebenen Prepolymer-Gemischs werden 1,7 g $S_8$-Schwefel und 0,28 g Zink-N-diäthyl-dithio-carbamat /Vulkacit LDA, Bayer AG/ feinst verteilt gegeben, und das Gemisch wird gemäß der Vorschrift des Beispiels 1B) und 1C) zum Formteil verarbeitet.

Beispiel 4

Zu 100 Gew.-Tln. des unter Beispiel 1 A) beschriebenen Gemischs werden 10 g Ruß /Printex V der Fa. Degussa/ eingearbeitet sowie feinst verteilt 0,6 g $S_8$-Schwefel und 0,28 g Zink-N-diäthyl-dithiocarbamat /Vulkacit LDA BAYER AG/ gegeben. Das Gemisch wird gemäß der Vorschrift des Beispiels 1B) und 1C) zum Formteil verarbeitet.

Tabelle 1: Mechanisches Werteniveau der nach den Beispielen erhaltenen Elastomeren

| Beispiel-Nr. | Zugversuch DIN 53 504 | | | | Weiterreißversuch DIN 53 515 | Abrieb DIN 53 516 | Dichte | shore |
|---|---|---|---|---|---|---|---|---|
| | $\sigma_{100\,\%}$ [MPa] | $\sigma_{300\,\%}$ [MPa] | $\sigma_B$ [MPa] | $\varepsilon_B$ [%] | [KN/m] | [$mm^3$] | $g/cm^3$ | A-Härte |
| 1 | 1,9 | 2,3 | 2,6 | 760 | 15,6 | 125 | 1.035 | 60 |
| 2 | 2,1 | 3,25 | 15,0 | 870 | 14,4 | 24 | 1.035 | 58 |
| 3 | 2,1 | 3,2 | 9,9 | 740 | 15,5 | 59 | 1.025 | 62 |
| 4 | 2,1 | 3,4 | 12,1 | 620 | 16,3 | 61 | 1.035 | 74 |

BAD ORIGINAL



Patentansprüche

1) Verfahren zur Herstellung von vulkanisierten, Urethangruppen aufweisenden Elastomeren durch Gießen, dadurch gekennzeichnet, daß man

1. flüssige, funktionelle Gruppen aufweisende Dien-Polymerisate mit

2. mindestens zwei Hydroxylgruppen aufweisenden Verbindungen vom Molekulargewicht 400 bis 10 000,

3. Polyisocyanaten,

4. mindestens zwei aktive Wasserstoffatome aufweisende Vernetzer vom Molekulargewicht 32 bis 400,

5. den für die Vulkanisation üblichen Vulkanisations- und Vernetzungsmitteln, sowie gegebenenfalls

6. verstärkenden Füllstoffen

vermischt, das Gemisch in eine Form gießt, dort reagieren läßt und das Formteil anschließend bei Temperaturen über 120°C vulkanisiert.

2) Verfahren nach Anspruch 1, dadurch gekennzeichnet, daß das flüssige Dienpolymerisat eine mittlere Funktionalität von 2 bis 3 und ein mittleres Molekulargewicht zwischen 500 und 30 000, vorzugsweise 1000 und 10 000, besitzt.

3) Verfahren nach den Ansprüchen 1 und 2, dadurch gekennzeichnet, daß die funktionelle Gruppe eine Carboxyl-, Amino-, Thiol- und/oder eine Hydroxylgruppe oder ein Halogenatom ist.

4) Verfahren nach Ansprüchen 1 bis 3, dadurch gekennzeichnet, daß als Dienpolymerisat Polybutadienole oder Copolymere aus Styrol und/oder Acrylnitril mit Butadien verwendet werden.

5) Verfahren nach Ansprüchen 1 bis 4, dadurch gekennzeichnet, daß Polyisocyanate in Form von NCO-Gruppen aufweisenden Voraddukten mit den mindestens zwei Hydroxylgruppen aufweisenden Verbindungen vom Molekulargewicht 400 bis 10 000 eingesetzt werden.

6) Verfahren nach Ansprüchen 1 bis 5, dadurch gekennzeichnet, daß als Vernetzer Di- oder Polyamine eingesetzt werden.

7) Verfahren nach Ansprüchen 1 bis 6, dadurch gekennzeichnet, daß als Vernetzer aromatische Diamine verwendet werden.

8) Verfahren nach Ansprüchen 1 bis 7, dadurch gekennzeichnet, daß Ruß, Kieselsäure und Glas als verstärkende Füllstoffe sowie zusätzlich Weichmacher und Strecköle eingesetzt werden.

9) Verfahren nach Ansprüchen 1 bis 8, dadurch gekennzeichnet, daß das Elastomer außerhalb der Form vulkanisiert wird.

10) Verwendung der nach Ansprüchen 1 bis 9 erhaltenen Elastomere zur Herstellung von Reifen sowie Reifenbestandteilen wie Laufstreifen und/oder Seitenteilen sowie von runderneuerten Luftreifen.

Nummer der Anmeldung

Europäisches Patentamt

# EUROPÄISCHER RECHERCHENBERICHT

EP 79 103 154.5

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| | GB - A - 1 145 338 (SINCLAIR RESEARCH) * Ansprüche 1 bis 3; Seite 1, Zeilen 7 bis 9; Seite 4, Zeilen 12 bis 16; Seite 6, Zeilen 17 bis 27; Seite 7, Zeilen 1 bis 4; Seite 11, Zeilen 16 bis 29 und 38 bis 45 * | 1,2, 4-8 | C 08 G 18/69<br>C 08 G 18/65<br>C 08 G 18/10<br>C 08 J 3/24 |
| | -- | | |
| | US - A - 3 607 976 (HSIEH et al.) * Ansprüche 1, 2, 8; Spalte 1, Zeilen 7 bis 11; Spalte 2, Zeilen 8 bis 19 und 66 bis 75 * | 1-4, 6,7 | |
| | -- | | RECHERCHIERTE SACHGEBIETE (Int. Cl.³) |
| A | DE - A1 - 2 640 645 (BRIDGESTONE TIRE) * Seite 11, Absatz 2 * | 10 | C 08 G 18/00<br>C 08 J 3/00<br>C 08 L 75/00 |
| | -- | | |
| A | DE - A1 - 2 510 703 (PHOENIX GUMMIWERKE) * ganzes Dokument * | 10 | |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 02-01-1980 | MARX |